# EUROPÄISCHE PATENTSCHRIFT

(11) **EP 1 792 535 B1**
(45) Veröffentlichungstag und Bekanntmachung des Hinweises auf die Patenterteilung: **08.10.2008**
(21) Anmeldenummer: 06023992.8
(22) Anmeldetag: 20.11.2006
(51) Int. Cl.: A01G 23/099

(54) **Vorrichtung zum Baumfällen**
Device for felling trees
Dispositif d'abattage d'arbres

(30) Priorität: 01.12.2005 AT 19402005
(43) Veröffentlichungstag der Anmeldung: 06.06.2007
(73) Patentinhaber: Gupper, Clemens, 2881 Trattenbach (AT)
(72) Erfinder: Gupper, Clemens, 2881 Trattenbach (AT)
(74) Vertreter: Puchberger, Peter

(56) Entgegenhaltungen:
- EP-A1- 1 468 787
- CH-A- 380 433
- SU-A1- 818 556
- US-A- 3 548 899

## Beschreibung

Die Erfindung betrifft eine Vorrichtung zum Baumfällen, im Speziellen zum Beeinflussen der Fallrichtung eines Baumes mit einer mit dem Baumstamm verbindbaren Gegenhaltung.

Es ist beim Baumfällen schon seit jeher ein Problem, die Fallrichtung des betreffenden Baumes vorzugeben. Zur Lösung dieses Problems werden im Stand der Technik verschiedene Methoden angewandt. Im einfachsten Fall wird ein Freikeil auf jener Seite des Baumes, auf die er fallen soll, geschnitten und an der gegenüberliegenden Seite ein Sägeschnitt angebracht. Anschließend wird in den Sägeschnitt ein Keil eingeschlagen, der den Baum in die gewünschte Fallrichtung zum Kippen bringen soll. Eine solche Vorrichtung ist aus CH-A-380 433 bekannt.

Bei diesem Vorgehen ergeben sich jedoch mehrere Probleme was das Beeinflussen der Fallrichtung betrifft. Zum Einen muss der Keil bei Bäumen mit größerem Stammdurchmesser eine beachtliche Dicke aufweisen, um den Stamm auch nur geringfügig entlang seiner Längsachse zu neigen. Des weiteren muss der Keil in den Stamm geschlagen werden, wodurch der Baum nicht die Möglichkeit hat sich langsam zu neigen. Oftmals wird durch das Einschlagen des Keiles auch nur erreicht, dass das Stammholz an der entsprechenden Stelle verdichtet wird, ohne eine Neigung des Baumes zu erzielen. Bei Bäumen unter 30 cm Stammdurchmesser können Keile nahezu überhaupt nicht mehr eingesetzt werden, da aufgrund des Freikeils für die Fallrichtung, der notwendigen Restholzbreite und der Sägebreite nicht genügend Platz zum Einschlagen eines Keiles übrig bleibt. Somit kann die Fallrichtung von Bäumen mit bis zu einer Tonne auf diese Weise so gut wie gar nicht beeinflusst werden.

Eine weitere bekannte Methode die Fallrichtung eines Baumes zu beeinflussen ist es, mittels eines Zugfahrzeugs und eines Seils den angeschnittenen Baum in die entsprechende Fallrichtung zu ziehen. Auch bei diesem Vorgehen ergeben sich mehrere Probleme. Abgesehen vom höheren Material- und Personalaufwand ist eine Positionierung des Zugfahrzeuges im Gelände nicht einfach, bzw. oft nicht möglich. Die entsprechende Seillänge muss mindestens die Baumlänge betragen und das Seil kommt nach dem Umfallen des Baumes unter diesem zu liegen. Das Seil muss also in einem zusätzlichen Arbeitsschritt wieder unter dem Baum herausgearbeitet werden, was sehr zeitaufwendig ist, da es sich unter dem gefällten Baum verhängen kann. Ein weiterer Mehraufwand bei diesem Verfahren ist dadurch gegeben, dass das Seil in einer gewissen Höhe an den Baum angelegt werden muss, wobei ca. 4 m über dem Boden als Minimum anzunehmen sind, was einen weiteren Geräteaufwand wie z. B. den Einsatz von Leitern erfordert.

Es ist somit Aufgabe der Erfindung eine Vorrichtung zu schaffen, welche es erlaubt die Fallrichtung eines Baumes mit beliebiger Stammdicke genauer zu beeinflussen, wobei gleichzeitig die oben genannten Nachteile beseitigt werden.

Dies wird durch die erfindungsgemäße Vorrichtung dadurch erreicht, dass sie einen entlang des Baumstammes anlegbaren Hebelarm mit einem unteren und oberen Abstützpunkt umfasst, und wobei zumindest einer der Abstützpunkte eine Druckvorrichtung aufweist, wobei die Druckvorrichtung an einem Endabschnitt des Hebelarmes in einem Winkel zur Längsrichtung des Hebelarms und verbunden mit dem Abstützpunkt angeordnet ist.

Die Gegenhaltung kann eine am Hebelarm befestigbare oder befestigte Schlinge sein, wobei diese Schlinge je nach Ausführungsform zum Beispiel eine Kette oder ein Seil sein kann.

In einer möglichen Ausführungsform der Erfindung kann die Druckvorrichtung eine Spindel sein. In einer weiteren Ausführungsform der Erfindung kann die Druckvorrichtung ein pneumatischer oder hydraulischer Druckstempel sein. Als ein weiteres erfindungsgemäßes Merkmal kann die Druckvorrichtung über einen Motor oder auch von Hand antreibbar sein.

Die Abstützpunkte können ferner mit Krallen versehen sein. Bevorzugt ist die Druckvorrichtung an einem Endabschnitt des Hebelarms in einem Winkel zur Längsrichtung des Hebelarms und verbunden mit dem Abstützpunkt angeordnet. Weiters ist es ein erfindungsgemäßes Merkmal, dass zumindest einer der Abstützpunkte, vorzugsweise jener der die Druckvorrichtung trägt, mittels eines Gelenks mit dem Hebelarm verbunden und in Längsrichtung des Hebelarmes schwenkbar gelagert ist. Dies ist für die Streckung der Vorrichtung, wenn der Baum sich neigt, von Bedeutung. Die Anordnung der Druckvorrichtung an einem Endabschnitt des Hebelarms in einem Winkel zur Längsrichtung des Hebelarms hat den Vorteil, dass die auftretenden Druckkräfte entlang der Längsachse der Druckvorrichtung wirken, wodurch die Querkräfte auf die Druckvorrichtung minimiert sind und ein Verkanten der beweglichen Teile der Druckvorrichtung, z. B. das Gewinde der Spindel bzw. der Kolben eines Druckstempels, vermieden wird. Durch die Lagerung der Druckvorrichtung mittels eines Gelenks kann die Vorrichtung noch flexibler an die jeweiligen Gegebenheiten angepasst werden. Zum Beispiel kann je nach Art des Baumstammes der Winkel der Druckvorrichtung verändert werden, um einen optimalen Ansatzpunkt zu finden.

Des weiteren betrifft die Erfindung ein Verfahren zum Fällen von Bäumen, dadurch gekennzeichnet, dass es folgende Schritte umfasst.
➢ Durchführen der vorbereitenden Schnitte zum Fällen des Baumes, wie das Vorsehen eines Freikeiles und eines Sägeschnitts,
➢ gegebenenfalls Anbringen zusätzlicher Einschnitte zum Einsetzen der Abstützpunkte,
➢ Anlegen des Hebelarmes entlang des Baumstammes, sodass der Hebelarm den vorbereiteten Fällschnitt überragt und der Hebelarm gegenüber der gewünschten Fallrichtung angeordnet ist,
➢ Festzurren des Hebelarms entlang des Baumstammes mit Hilfe der Gegenhalterung,
➢ Betätigen der Druckvorrichtung um einen Druck in Richtung der Fallrichtung zu erzeugen, bis sich der Stamm neigt,
➢ Durchtrennen des Baumstammes an der vorbereiteten Stelle, wenn der Baum fällt.

Besonderer Vorteil der Verwendung der erfindungsgemäßen Vorrichtung in einem erfindungsgemäßen Verfahren zum Fällen von Bäumen ist es, dass aufgrund der Anordnung der Vorrichtung das verbleibende Restholz mehrheitlich quer belastet wird und sich dadurch gute Kombinationsmöglichkeiten mit Keilen ergeben, die hauptsächlich die Senkrechte belasten.

Weitere Merkmale sind den Ansprüchen, der Beschreibung und der Zeichnung zu entnehmen.

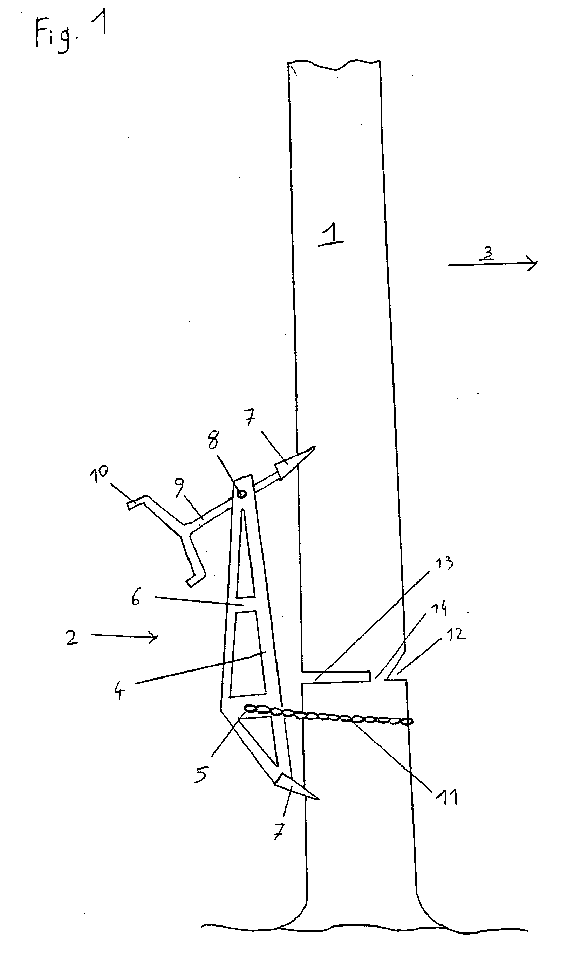

Fig. 1 zeigt eine schematische Seitenansicht eines Baumstammes mit daran angeordneter erfindungsgemäßer Vorrichtung.

Der in Fig. 1 gezeigte schematisch dargestellte Baumstamm 1 weist vorbereitende Einschnitte in Form eines Freikeiles 12 und eines Sägeschnittes 13 auf. Der gewünschte Drehpunkt für das Fällen des Baumes 1 in Richtung der gewünschten Fallrichtung 3 soll im Restholzbereich 14 liegen. Aufgrund des Eigengewichts des Stammes und der dadurch wirkenden Kraft nach unten würde dieser Drehpunkt aufgrund der Geometrie der angeordneten vorbereitenden Einschnitte jedoch in der Mitte des Baumstammes 1 liegen, was dazu führt, dass der Baumstamm 1 eher geneigt ist entgegen der gewünschten Fallrichtung 3 zu fallen.

Um dennoch das Umfallen in die gewünschte Fallrichtung zu erreichen, wird die Fällvorrichtung 2 wie in Fig. 1 gezeigt mit dem Hebelarm 4 an den Baumstamm 1 angelegt und mittels der an einem Kettenhalterungspunkt 5 befestigten Kette 11 um den Baum herum fixiert. Die Abstützpunkte 7, in Form von Krallen liegen dabei oberhalb und unterhalb des Sägeschnitts 13 am Baumstamm 1 an, bzw. werden in entsprechenden vorbereiteten Einschnitten angeordnet.

Der Hebelarm 4 ist in der gezeigten Ausführungsform als stumpfes Dreieck mit Querverstrebungen 6 ausgebildet, was der Vorrichtung eine erhöhte Stabilität verleiht. Die Druckvorrichtung 9 in Form einer Spindel ist über ein Gelenk 8 an einem Ende des Hebelarms 4 mit diesem verbunden. Nach dem Festzurren der Kette 11 kann nun über die Griffe 10 die Spindel 9 betätigt werden, wodurch Druck auf die Abstützpunkte 7 sowie weiterer Zug auf die Kette 11 ausgeübt wird. Durch kontinuierliche Erhöhung des Drucks mittels der Druckvorrichtung 9 wird der Baum 1 dazu gezwungen in Richtung der gewünschten Fallrichtung 3 zu fallen.

Es versteht sich, dass die Position der Kette 11 beliebig oberhalb oder unterhalb des Sägeschnitts 13 je nach örtlicher Gegebenheit angeordnet sein kann. Die Druckvorrichtung 9 kann über das Gelenk 8 in ihrem Winkel zum Baumstamm 1 variiert werden, um an verschiedene Gegebenheiten anpassbar zu sein. Besonderer Vorteil dieser Vorrichtung 2 ist es, dass aufgrund der Anordnung des Hebelarmes 4 entlang des Baumstammes 1 die Kräfte an den Abstützpunkten 7 nahezu horizontal auf den Baumstamm wirken, wodurch ein Abrutschen der Vorrichtung 2 verhindert wird.

Außerdem ist eine Gelenkverbindung 8 von Vorteil sobald der Baum 1 sich neigt, damit die Druckvorrichtung 9 weiterhin einen günstigen Winkel zur Kraftübertragung aufweist. In einem Idealfall ist der Winkel zwischen der Längsachse der Druckvorrichtung 9 und der Verbindungslinie zwischen dem Abstützpunkt 7 der Druckvorrichtung 9 und dem Drehpunkt, welcher im Restholz 14 liegt 90 ° um eine maximale Kraftübertragung zu gewährleisten. Sobald der Baum sich dementsprechend von der Vorrichtung 2 wegneigt, muss der Winkel der Druckvorrichtungslängsachse zum Hebelarm 4 weiter werden, um den Winkel zur Kraftübertragung beizubehalten. Dies ist aufgrund der Gelenkverbindung 8 möglich.

Um ein sicheres Arbeiten zu ermöglichen, wird vorzugsweise eine spezielle Schnittanordnung gewählt. Wird z. B. der Sägeschnitt 13 tiefer angesetzt als der Freikeil 12 und die Kette 11 unterhalb des Schnittes 13 angelegt, wird ein Wegrutschen des Baumstammes 1 beim Fällen vermieden. Ebenso kann bei oberhalb des Sägeschnitts 13 angelegter Kette 11 der Freikeil 12 tiefer als der Sägeschnitt 13 angebracht werden, wodurch der zu fällende Baumstamm 1 nicht nach hinten wegrutschen kann.

Bei schief stehenden Bäumen kann die Vorrichtung 2 auch schräg zur Fallrichtung anstelle von exakt gegenüber angebracht werden, um einen Gewichtsausgleich herbeizuführen und zu verhindern, dass der Baum auf die von vorneherein geneigte Seite fällt.

## Patentansprüche

1. Vorrichtung zum Baumfällen, im Speziellen zum Beeinflussen der Fallrichtung eines Baumes mit einer mit dem Baumstamm verbindbaren Gegenhaltung, wobei sie einen entlang des Baumstammes (1) anlegbaren Hebelarm (4) mit einem jeweils am Baumstamm (1) angreifenden unteren und oberen Abstützpunkt (7) umfasst, **dadurch gekennzeichnet, dass** zumindest einer der Abstützpunkte (7) eine im Wesentlichen, quer zur Längsachse des Baumstammes (1) wirkende Druckvorrichtung (9) aufweist, wobei die Druckvorrichtung (9) an einem Endabschnitt des Hebelarmes (4) in einem Winkel zur Längsrichtung des Hebelarms (4) und verbunden mit dem Abstützpunkt (7) angeordnet ist.

2. Vorrichtung nach Anspruch 1, **dadurch gekennzeichnet, dass** die Gegenhaltung eine am Hebelarm befestigbare oder befestigte Schlinge ist.

3. Vorrichtung nach Anspruch 2, **dadurch gekennzeichnet, dass** die Schlinge eine Kette (11) oder ein Seil ist.

4. Vorrichtung nach einem der Ansprüche 1 bis 3, **dadurch gekennzeichnet, dass** die Druckvorrichtung (9) eine Spindel ist.

5. Vorrichtung nach einem der Ansprüche 1 bis 3, **dadurch gekennzeichnet, dass** die Druckvorrichtung (9) ein hydraulischer oder pneumatischer Druckstempel ist.

6. Vorrichtung nach einem der Ansprüche 1 bis 5, **dadurch gekennzeichnet, dass** die Druckvorrichtung (9) über einen Motor oder von Hand antreibbar ist.

7. Vorrichtung nach einem der Ansprüche 1 bis 6, **dadurch gekennzeichnet, dass** die Abstützpunkte (7) mit Krallen versehen sind.

8. Vorrichtung nach einem der Ansprüche 1 bis 7, **dadurch gekennzeichnet, dass** zumindest einer der Abstützpunkte (7), vorzugsweise jener der die Druckvorrichtung (9) trägt mittels eines Gelenks (8) mit dem Hebelarm (4) verbunden und in Längsrichtung des Hebelarmes (4) schwenkbar gelagert ist.

9. Verfahren zum Fällen von Bäumen, mit Hilfe einer Vorrichtung gemäß einem der Ansprüche 1 bis 8, **dadurch gekennzeichnet, dass** es folgende Schritte umfasst:
- ) Durchführen der vorbereitenden Schnitte zum Fällen des Baumes, wie das Vorsehen eines Freikeiles (12) und eines Sägeschnitts (13),
- ) gegebenenfalls Anbringen zusätzlicher Einschnitte zum Einsetzen der Abstützpunkte (7),
- ) Anlegen des Hebelarmes (4) entlang des Baumstammes, sodass der Hebelarm (4) den vorbereiteten Fällschnitt (12, 13) überragt und der Hebelarm (4) gegenüber der gewünschten Fallrichtung (3) angeordnet ist,
- ) Festzurren des Hebelarms (4) entlang des Baumstammes (1) mit Hilfe der Gegenhalterung (11),
- ) Betätigen der Druckvorrichtung (9) um einen Druck in Richtung der Fallrichtung (3) zu erzeugen, bis sich der Baumstamm (1) neigt,
- ) Durchtrennen des Baumstammes (1) an der vorbereiteten Stelle.

## Claims

1. Tree felling device, in particular for influencing the falling direction of a tree, with a holder which can be connected to the tree trunk, encompassing a lever arm (4) which can be laid along the tree trunk (1) with a lower and an upper support point (7) each acting upon the tree trunk (1), **characterised in that** at least one of the support points (7) has a pressure device (9) acting essentially perpendicular to the longitudinal axis of the tree trunk (1), the pressure device (9) being arranged on one end section of the lever arm (4) at an angle to the longitudinal direction of the lever arm (4) and connected to the support point (7).

2. Device according to claim 1, **characterised in that** the holder is a sling fastenable or fastened to the lever arm.

3. Device according to claim 2, **characterised in that** the sling is a chain (11) or a rope.

4. Device according to one of claims 1 to 3, **characterised in that** the pressure device (9) is a spindle.

5. Device according to one of claims 1 to 3, **characterised in that** the pressure device (9) is a hydraulic or pneumatic jack.

6. Device according to one of claims 1 to 5, **characterised in that** the pressure device (9) can be driven by a motor or by hand.

7. Device according to one of claims 1 to 6, **characterised in that** the support points (7) are provided with claws.

8. Device according to one of claims 1 to 7, **characterised in that** at least one of the support points (7), preferably the one which supports the pressure device (9) by means of a joint (8) is connected to the lever arm (4) and is pivotably mounted in the longitudinal direction of the lever arm (4).

9. Method for felling trees with the aid of a device according to one of claims 1 to 8, **characterised in that** it comprises the following steps:
- making the preparatory cuts to fell the tree, such as the provision of a free wedge (12) and of a saw cut (13),
- application where necessary of additional incisions to insert the support points (7),
- laying of the lever arm (4) along the tree trunk such that the lever arm (4) projects beyond the prepared fall cut (12, 13) and the lever arm (4) is arranged opposite the desired fall direction (3)
- securing of the lever arm (4) along the tree trunk (1) with the aid of the holder (11),
- actuation of the pressure device (9) in order to generate a pressure in the direction of the direction of fall (3), until the tree trunk (1) is leaning,
- cutting through the tree trunk (1) at the prepared place.

## Revendications

1. Dispositif pour l'abattage d'arbres, plus spécialement pour influencer la direction de chute d'un arbre, comprenant un système de retenue pouvant être lié au tronc de l'arbre, le dispositif comprenant un bras de levier ( 4 ) pouvant être appliqué le long du tronc d'arbre ( 1 ) et comportant un point d'appui supérieur et inférieur ( 7 ) agissant respectivement sur le tronc d'arbre ( 1 ), **caractérisé en ce qu'**au moins l'un des points d'appui ( 7 ) comporte un dispositif de poussée et de compression ( 9 ) agissant sensiblement transversalement à l'axe longitudinal du tronc d'arbre ( 1 ), le dispositif de poussée et de compression ( 9 ) étant disposé sur un tronçon d'extrémité du bras de levier ( 4 ), en faisant un angle avec la direction longitudinale du bras de levier ( 4 ), et étant relié au point d'appui ( 7 ).

2. Dispositif selon la revendication 1, **caractérisé en ce que** le système de retenue est formé par une boucle fixée ou pouvant être fixée au bras de levier.

3. Dispositif selon la revendication 2, **caractérisé en ce que** la boucle est une chaîne ( 11 ) ou une corde.

4. Dispositif selon l'une des revendications 1 à 3, **caractérisé en ce que** le dispositif de poussée et de compression ( 9 ) est une broche.

5. Dispositif selon l'une des revendications 1 à 3, **caractérisé en ce que** le dispositif de poussée et de compression ( 9 ) est un poussoir de compression hydraulique ou pneumatique.

6. Dispositif selon l'une des revendications 1 à 5, **caractérisé en ce que** le dispositif de poussée et de compression ( 9 ) peut être entraîné par l'intermédiaire d'un moteur ou manuellement.

7. Dispositif selon l'une des revendications 1 à 6, **caractérisé en ce que** les points d'appui ( 7 ) sont pourvus de griffes.

8. Dispositif selon l'une des revendications 1 à 7, **caractérisé en ce que** l'un au moins des points d'appui ( 7 ) , de préférence celui portant le dispositif de poussée et de compression ( 9 ), est relié au moyen d'une articulation ( 8 ) au bras de levier ( 4 ) et est monté pivotant dans la direction longitudinale du bras de levier ( 4 ).

9. Procédé d'abattage d'arbres à l'aide d'un dispositif selon l'une des revendications 1 à 8, **caractérisé en ce qu'**il comprend les étapes suivantes :
- exécution des coupes préparatoires pour l'abattage de l'arbre, comme la réalisation d'un coin de dégagement ( 12 ) et d'une coupe de sciage ( 13 ),
- éventuellement réalisation d'incisions supplémentaires pour la mise en place des points d'appui ( 7 ),
- application du bras de levier ( 4 ) le long du tronc d'arbre, de manière à ce que le bras de levier ( 4 ) chevauche la coupe d'abattage ( 12, 13 ) préparée et que le bras de levier ( 4 ) soit disposé à l'opposé de la direction de chute ( 3 ) souhaitée,
- arrimage du bras de levier ( 4 ) le long du tronc d'arbre ( 1 ) à l'aide du système de retenue ( 11 ),
- actionnement du dispositif de poussée et de compression ( 9 ) pour produire une compression de poussée dans le sens de la direction de chute ( 3 ), jusqu'à ce que le tronc d'arbre ( 1 ) s'incline,
- sectionnement du tronc d'arbre ( 1 ) au point préparé à cet effet.
